# FASCICULE DE BREVET EUROPEEN

(11) **EP 1 423 665 B1**
(45) Date de publication et mention de la délivrance du brevet: **29.03.2006**
(21) Numéro de dépôt: 02783145.2
(22) Date de dépôt: 05.09.2002
(51) Int. Cl.: G01G 19/44

(54) **APPAREIL DE PESAGE**
WÄGEEINRICHTUNG
WEIGHING DEVICE

(30) Priorité: 05.09.2001 FR 0111499
(43) Date de publication de la demande: 02.06.2004
(73) Titulaire: SEB S.A., 69130 Ecully (FR)
(72) Inventeur: LINGLIN, Benoit, F-74350 Cruseilles (FR); ANTHOINE-MILHOMME, Didier, Le Coteau des Mésanges, F-73410 Albens (FR); SARRAZIN, Michel, F-74150 Massingy (FR)
(74) Mandataire: Kiehl, Hubert
(86) Numéro de dépôt international: PCT/FR2002/003018
(87) Numéro de publication internationale: WO 2003/021208

(56) Documents cités:
- EP-A- 1 043 573
- US-A- 4 886 133

## Description

La présente invention est relative à un appareil de pesage du genre pèse-personne ou balance de ménage comportant des jauges d'extensométrie associées à un circuit électronique de mesure délivrant un signal qui est fonction du poids à mesurer et elle concerne plus particulièrement la structure d'un tel appareil.

Un tel appareil de pesage comprend en principe un plateau susceptible de recevoir le poids à mesurer, au moins un corps d'épreuve comportant sur l'une des faces des jauges d'extensométrie, l'une des extrémités de ce corps étant reliée au plateau et l'autre à un socle ou à un pied destiné à reposer sur une surface plane. Les deux extrémités de ce corps sont encastrées au plateau et au socle et elles délimitent une barre en un matériau élastique supportant les jauges de contrainte et déformable essentiellement par flexion sous l'effet du poids à peser. Les jauges sont reliées à un circuit électronique pour convertir les déformations subies par les jauges en signaux électriques et transformer ces derniers en valeurs numériques correspondant au poids mesuré.

Dans un tel appareil, les extrémités du corps d'épreuve portant la barre de flexion doivent être solidement encastrées par rapport au plateau et au socle de façon à ce que la charge appliquée sur le plateau engendre une force qui soit bien prise en compte par la barre de flexion.

Des appareils de pesage du type décrit dans le document FR 2 554 229 au nom de la demanderesse, comportent un corps d'épreuve sous forme d'un barreau métallique de section carrée, dont les extrémités sont rigidement fixées au plateau et au socle de façon à ce que le barreau puisse fléchir sous l'effet de la charge appliquée sur le plateau. Pour résister aux contraintes élevées, le plateau ainsi que le socle doivent fournir un encastrement solide et donc volumineux en matière. Le barreau est fixé aux pièces d'encastrement dans le socle et le plateau au moyen de brides et des vis de fixation. Une telle structure mécanique s'avère encombrante et complexe, car elle fait appel à un volume important de matière et à une multitude de pièces de fixation.

Un autre appareil de pesage est décrit dans le document EP 0 505 493. Cet appareil comporte un socle et un plateau reposant sur quatre cellules de pesée de forme plate. Chaque cellule de pesée comprend une barre de flexion comportant des jauges d'extensométrie, la barre de flexion subissant une déformation sous l'effet du poids à mesurer qui est appliqué moyennant un élément en U à l'une des extrémités de la barre de flexion, alors que l'autre extrémité est fixée par vis ou par rivets au socle de l'appareil. Un tel type de fixation donne lieu à de fortes sollicitations des points de fixation de la cellule de pesée et altère les caractéristiques métrologiques de l'appareil.

Par ailleurs, on connaît le document US-A-4886133 qui décrit un pèse-personne comportant un barreau de section carrée où deux découpes sont pratiquées dans sa partie centrale formant une section en I et délimitant une paroi sur laquelle sont déposées dès jauges de contrainte et dans laquelle se développent des contraintes de cisaillement produisant un signal de mesure. Le barreau est monté par vissage ou par collage sur des supports agencés entre un plateau de réception de poids et une plaque de base et autorisant une flèche de déformation. Une telle construction où le capteur n'est pas directement solidaire du plateau ou de la zone d'appui présente une structure complexe, avec plusieurs liaisons süsceptibles de s'altérer dans le temps.

Le document EP-A-1043573, sur lequel est basé le préambule de la revendication principale, décrit un appareil de pesage comprenant un plateau rigide destiné à recevoir le poids à mesurer, une zone d'appui fixe et au moins un capteur de poids encastré par cottage à l'une de ses extrémités dans le plateau et à l'extrémité opposée dans la zone d'appui fixe, ledit capteur comportant une barre déformable principalement par flexion sous l'effet du poids appliqué sur ledit plateau et portant des jauges d'extensométrie. Dans ce capteur, la barre déformable est reliée par collage à des moyens de fixation au plateau réalisés sous forme de deux pièces d'écartement. Une telle construction de capteur en plusieurs pièces augmente le coût et l'encombrement de l'appareil et est moins fiable dans le temps.

Le but de la présente invention est de remédier aux inconvénients précités et de fournir un appareil de pesage comportant de bonnes caractéristiques métrologiques et présentant une durée de vie importante.

Un autre but de l'invention est de réaliser un appareil de pesage de profil mince, qui soit fiable en fonctionnement, pouvant être réalisé par un assemblage de pièces en des matériaux différents, tout en utilisant une méthode de fabrication simple.

Un but supplémentaire de l'invention est un appareil de pesage de structure simple, facile à industrialiser pour un faible coût de fabrication.

Ces buts sont réalisés avec un appareil de pesage comprenant un plateau rigide destiné à recevoir le poids à mesurera une zone d'appui fixe et au moins un capteur de poids encastré par collage à l'une de ses extrémités dans le plateau et à l'extrémité opposée dans la zone d'appui fixe, ledit capteur de poids comportant une barre déformable principalement par flexion sous l'effet du poids appliqué sur ledit plateau et portant des jauges d'extensométrie, caractérisé en ce que le capteur est réalisé avec sa barre déformable en une seule pièce, en étant plié ou plan, et en ce qu'au moins l'une des extrémités d'encastrement dudit capteur de poids présente une surface destinée à être directement fixée par collage au plateau rigide ou à la zone d'appui fixe.

Par plateau rigide on comprend une pièce ayant généralement une forme de plaque, réalisée en un matériau présentant des dimensions et des caractéristiques mécaniques faisant qu'elle résiste aux déformations sous l'effet du poids qui vient s'appliquer sur sa face supérieure. Par capteur on comprend un corps d'épreuve dont les deux extrémités sont encastrées au plateau et au socle et délimitent une barre en un matériau élastique supportant les jauges de contrainte et déformable essentiellement par flexion sous l'effet du poids à peser. Par barre déformable principalement par flexion, on entend une barre déformable majoritairement par flexion, une composante mineure de déformation en torsion pouvant se rajouter selon le mode de fixation du capteur par et la direction d'application de la charge.

Un tel appareil de pesage est réalisé en utilisant un assemblage par collage entre le capteur de poids et son support, par exemple entre ce dernier et le plateau rigide recevant le poids à mesurer et/ou entre le capteur et l'appui fixe, notamment le socle ou le pied de l'appareil. Pour ceci, au moins l'une des extrémités du capteur présente une surface destinée au collage, surface qui peut être une surface sensiblement plane, ou également une surface gauche, la forme de cette surface étant en fonction de la forme de la surface avec laquelle elle vient en correspondance lors du collage.

Le collage consiste à réaliser un contact intime chimique entre deux solides à l'aide d'un adhésif. Le collage implique donc l'utilisation d'un matériau d'apport sous forme d'un adhésif appliqué sous forme liquide ou pâteux ou susceptible de le devenir, par exemple par chauffage, sur la surface d'au moins l'une des pièces à assembler et de provoquer la solidification de l'adhésif afin d'assurer une liaison forte et stable entre les pièces assemblées. La couche de colle est réalisée sous forme d'une couche continue, appelée joint, assurant une bonne transmission des efforts mécaniques entre les composants. L'adhésif répartit la charge sur toute la surface du joint, ce qui assure une distribution plus uniforme des contraintes statiques et dynamiques au lieu de les concentrer aux points de forte sollicitation, comme, par exemple, dans le cas d'une fixation mécanique à vis ou à rivets.

Ainsi, le collage est parfaitement adapté à l'assemblage des matériaux différents, des matériaux fragiles et des matériaux minces, tout en étant apte à transmettre les efforts mécaniques à travers le joint de colle. Le collage permet, de surcroît, d'augmenter la cadence de fabrication nécessitant, d'une part, un besoin moindre de pièces à assembler et, permettant, d'autre part, d'automatiser le processus de fabrication.

Avantageusement, ladite extrémité d'encastrement est directement fixée au plateau.

Le capteur étant collé par l'une de ses extrémités au plateau rigide supportant le poids à mesurer, l'effort est transmis directement et uniformément au capteur, notamment à la partie déformable de ce dernier, ce qui fait que la déformation de ce dernier suit d'une manière fidèle la valeur de la charge appliquée. Il a été ainsi constaté, lors des tests métrologiques effectués en laboratoire, que la linéarité d'un appareil de pesage utilisant un capteur relié par collage à un plateau rigide est nettement améliorée, restant dans des limites métrologiques imposées par les normes en vigueur, par rapport au même appareil utilisant un capteur relié par vissage au plateau.

De surcroît, un appareil de pesage comportant un capteur directement collé au plateau présente un profil très mince, car l'assemblage est exempt de toute pièce intermédiaire de liaison.

Utilement, ladite surface plane définit une zone de collage par capteur inversement proportionnelle au nombre de capteurs de poids de l'appareil.

Les dimensions de la zone de collage sont calculées en fonction des valeurs des contraintes appliquées au capteur et de manière à optimiser la liaison par collage de ce dernier avec son support.

Les dimensions et les caractéristiques mécaniques du capteur dépendent des portées maximum souhaitées, notamment 160 kg dans le cas d'un pèse-personne. Les fortes contraintes existant dans les encastrements du capteur dans le socle ou zone d'appui et dans le plateau de pesée doivent être réparties sur des surfaces de contact suffisamment importantes. De plus, les surfaces de répartition de contraintes doivent être calculées afin d'assurer une bonne résistance du joint de colle.

De par son montage en porte à faux entre un plateau et un socle ou une zone d'appui, un capteur de poids assemblé par collage soumet la zone de collage principalement à des sollicitations de compression et d'arrachement, en particulier aux extrémités de la liaison collée. L'amélioration de l'assemblage collé consiste à calculer une surface minimale de la zone de collage apte à résister aux charges appliquées et à mieux répartir les contraintes à travers le joint de colle. Une bonne conception de l'assemblage collé vise à créer une surface de collage et de transmission des efforts mécaniques aussi grande que possible, mais tout en tenant compte de considérations de coût de fabrication.

Ainsi, après de nombreux essais et tests effectués en atelier, il s'est finalement avéré que, dans le cas d'un pèse-personne comportant un seul capteur de poids agencé entre un plateau et un socle, capteur qui subit une charge maximale et est ainsi soumis à des sollicitations de flexion et de torsion, la surface de la zone de collage doit être égale ou supérieure à 30 cm² pour supporter une charge positionnée à un endroit quelconque sur le plateau. De la même manière, un pèse-personne comportant un plateau reposant sur au moins trois capteurs de poids, la surface de la zone de collage doit être supérieure à 9 cm² pour supporter une charge maximale positionnée à un endroit quelconque sur le plateau.

De préférence, la liaison par collage est sous forme d'un joint à recouvrement.

Par joint à recouvrement on comprend une superposition de deux surfaces séparées par un joint de colle. Ce type de joint assure un bon compromis entre la tenue mécanique de l'assemblage par collage et la facilité de fabrication. De surcroît, la tenue d'un tel type de joint dépend de l'épaisseur du joint de colle, elle peut donc être facilement adaptée à des matériaux différents et à des contraintes variées.

Avantageusement, ledit adhésif est choisi parmi les adhésifs époxy ou polyacryliques polymérisant aux UV ou en température.

Le choix de l'adhésif dépend de la nature des substrats et de la résistance qui doit être conférée à l'assemblage. Les adhésifs époxy ou polyacryliques polymérisant aux UV ou en température permettent de relier entre eux des matériaux différents, par exemple métal sur : verre, céramique, plexiglas®, pierre, ou métal sur métal, tout en conservant les caractéristiques des traitements thermiques réalisés et en assurant une résistance suffisante aux sollicitations statiques et dynamiques, ainsi qu'une bonne durée de vie au joint de colle.

Un tel adhésif est, par exemple, la colle acrylique réticulant aux UV référence 6128N de la société DELO lorsque l'un des plans à coller est en verre transparent aux UV.

Utilement, l'épaisseur de l'adhésif utilisé pour réaliser le collage est choisie en fonction de la nature des matériaux à coller et elle est de préférence comprise entre 0,05 et 0,5 mm.

L'épaisseur du joint collé détermine sa résistance aux contraintes de cisaillement et elle est choisie en fonction du couple des matériaux à coller. L'épaisseur du joint de colle doit en même temps être la plus fine possible afin de transmettre intégralement, sans amortissement, la valeur de la contrainte à travers le joint de colle. Ainsi, pour un capteur en acier collé sur un plateau en acier en utilisant une colle époxy à polymérisation en température, l'épaisseur du joint de colle est comprise entre 0,05 et 0,25 mm. Par contre, en utilisant la même colle pour un couple aluminium/acier on doit prévoir une épaisseur de joint de colle comprise entre 0,2 et 0,4 mm afin de supporter les contraintes de cisaillement dans le joint dues aux différents coefficients de dilatation entre les deux substrats. Il en est de même pour un plateau en verre trempé collé à un capteur en acier en utilisant une colle époxy ou polyacryliques à réticulation UV, dans quel cas l'épaisseur du joint de colle doit être comprise entre 0,25 et 0,5 mm.

De préférence, ledit plateau est réalisé en verre trempé ou en métal.

On peut réaliser le plateau rigide d'un appareil de pesage en divers matériaux, tels par exemple : le métal, la céramique, le plexiglas®, la pierre ou d'autres présentant des propriétés similaires. On préfère cependant un plateau en verre trempé car il possède de bonnes propriétés de rigidité pour des faibles dimensions de son épaisseur, tout en ayant une bonne résistance à la brisure par flexion, ou un plateau en métal, les deux matériaux ayant une bonne tenue mécanique aux charges appliquées dans un tel type d'appareil.

Avantageusement, l'appareil de pesage de l'invention comprend au moins trois capteurs de poids fixés avec l'une de leurs extrémités d'encastrement sur la périphérie d'un plateau, l'extrémité opposée étant déportée par rapport au plateau et fixée à un appui formant pied de l'appareil.

Un tel appareil à plusieurs capteurs est simple à construire, tout en permettant d'effectuer des mesures très précises, car les erreurs dues aux moments parasites sont minimisées. De surcroît, les flèches subies par les capteurs sont plus faibles et le profil de l'appareil est très mince.

D'autres caractéristiques et avantages de l'invention apparaîtront plus clairement à la lumière de la description et des dessins qui suivent, illustrant, à titre d'exemples non limitatifs, des modes de mise en oeuvre de l'invention.
Ainsi, référence est faite aux figures où:
- la figure 1a est une vue en coupe axiale d'un appareil de pesage selon un premier mode de réalisation de l'invention dont la figure 1b illustre une vue en perspective;
- les figures 2a à 2c illustrent différentes vues en perspective d'un appareil de pesage selon un deuxième mode de réalisation de l'invention.

L'appareil de pesage de l'invention comprend un plateau rigide 10,100 susceptible de recevoir le poids à mesurer, au moins un capteur de poids 30,300 comportant sur l'une de ses faces au moins deux jauges d'extensométrie R1,Ri, l'une des extrémités 60,600 du capteur étant encastrée au plateau rigide 10,100 et l'autre 70,700 à un socle ou zone d'appui 20,200 destiné à reposer sur une surface plane. Les deux extrémités 60,600 et 70,700 du capteur de poids délimitent une barre de flexion 40,400 qui est en un matériau élastique et qui est déformable principalement par flexion sous l'effet du poids à peser. Par barre de flexion 40,400, on désigne une barre déformable principalement par flexion, mais supportant également un effort de torsion plus faible qui apparaît selon le mode de fixation du capteur et la direction d'application de la charge. A titre d'exemple, les déformations subies par la barre de flexion 40,400 peuvent être dues en une proportion de 70 à 99 % à des efforts de flexion, la composante en torsion agissant pour le reste.

Les jauges d'extensométrie R1, Ri sont sérigraphiées sur une plaque mince 50,500 en céramique, par exemple en alumine, qui est collée sur la barre de flexion 40,400, dans le sens de sa longueur. On peut utiliser deux jauges d'extensométrie R1, Ri montées sur l'une des faces de la barre de flexion, ou plusieurs jauges montées sur l'une des faces de la barre de flexion ou, pour plus de précision, les jauges pourraient être montées de part de d'autre de cette dernière dans sa zone de déformation. Les jauges sont reliées par un montage du type en pont de Wheatstone à un circuit électronique pour convertir les déformations subies par les jauges en signaux électriques, transformer ces derniers en valeurs numériques correspondant au poids mesuré et les afficher.

Dans les exemples illustrés aux figures, le capteur de poids 30,300 présente une surface de collage S qui est sensiblement plane, destinée au contact avec celle d'un plateau 10,100 sensiblement plan. Cependant, la surface (S) peut être une surface gauche, par exemple, pour un plateau ayant une forme galbée, l'important est que les surfaces destinées au collage, notamment la surface d'extrémité du capteur et la surface du plateau soient bien mises en correspondance afin de réaliser un joint de colle d'épaisseur uniforme.

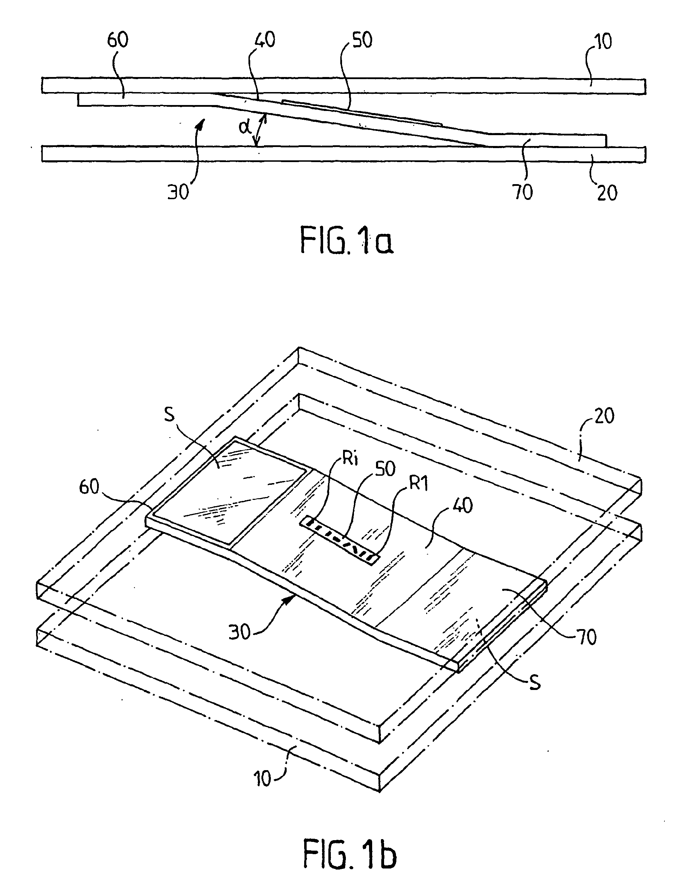

Les figures 1a et 1b illustrent un premier mode de réalisation de l'invention dans lequel l'appareil de pesage comporte un capteur de poids 30 sous forme d'un barreau en acier trempé de section carrée. Le barreau est monté en porte à faux entre un plateau horizontal rigide d'application du poids 10 et un socle fixe 20 parallèle au premier. Le capteur 30 est réalisé en une seule pièce avec les parties d'extrémité 60,70.

Le capteur 30 comporte une zone centrale formant barre de flexion 40 qui fait un certain angle α avec ses extrémités planes 60,70. L'angle d'inclinaison α doit permettre le déplacement du plateau 10 sous le poids appliqué et il doit être faible pour ne pas introduire des moments parasites trop importants. Le capteur 30 peut être réalisé par découpe et pliage d'une tôle en acier. Sur la partie centrale ou barre de flexion 40 est collée une plaque en alumine supportant les jauges de contrainte R1, Ri disposées symétriquement par rapport au centre de la barre 50.

Les parties planes d'extrémités 60,70 présentent chacune une surface plane S destinée à la fixation par collage avec le plateau 10, respectivement le socle 20. La surface S est calculée afin d'assurer d'une part une bonne répartition des contraintes aux points des jonctions entre le capteur et le plateau, respectivement le socle et, d'autre part assurer la fiabilité et la résistance mécanique de l'assemblage collé.

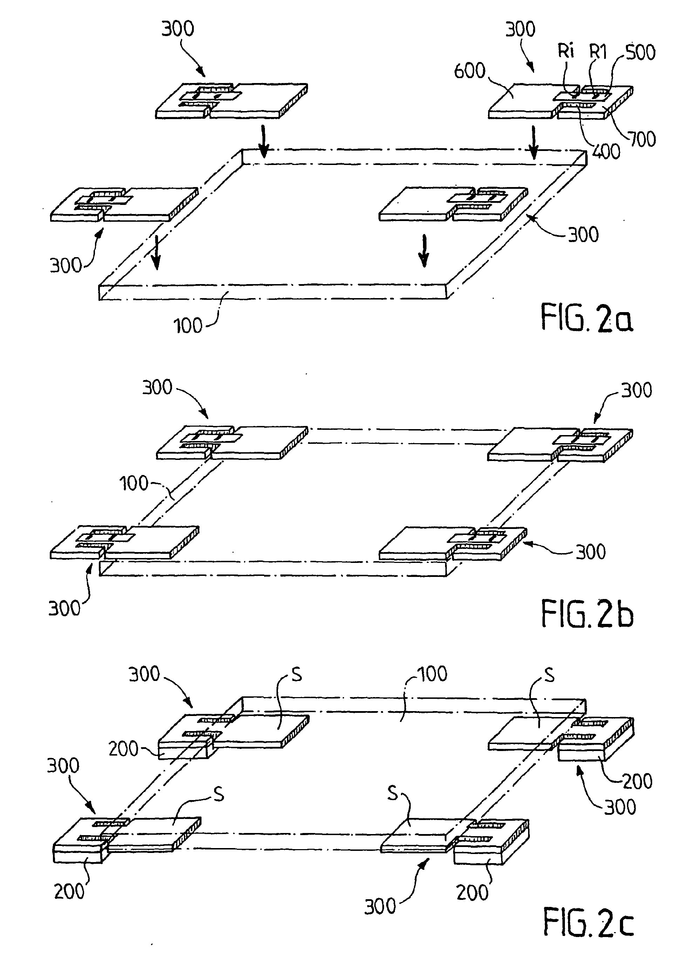

Les figures 2a à 2c illustrent un deuxième mode de réalisation de l'invention où le plateau rigide 100 repose sur quatre capteurs plans 300. Chaque capteur 300 est réalisé sous forme d'une seule pièce plane de forme initiale rectangulaire dans laquelle sont dégagées des fentes de manière à définir une barre de flexion centrale 400 comportant à l'une des extrémités une surface rectangulaire 600 et à l'extrémité opposée une pièce en U 700. Le capteur 300 est fixé par collage avec son extrémité 600 au plateau rigide 100, alors que l'extrémité opposée prend appui dans un pied 200 de forme creuse. Sur la barre de flexion 400 est collée une plaquette en alumine 500 portant deux jauges d'extensométrie R1, Ri sur sa face en regard du pied. La barre 400 fléchit sous l'effet du poids appliqué sur le plateau 100 et les déformations des jauges sont traduites par le circuit électronique en des valeurs du poids qui sont affichées par l'appareil.

La surface de collage S de l'extrémité 600 du capteur 300 est dimensionnée, comme pour les modes de réalisation précédents, afin de supporter une charge maximale appliquée au plateau et de réaliser un assemblage par collage résistant, apte à transmettre uniformément les contraintes du plateau 100 à la partie déformable 400 du capteur 300.

Le capteur 30,300 de l'invention est réalisé en acier trempé. Le plateau 10,100 peut être réalisé en divers matériaux, notamment : en verre, acier, aluminium, plexiglas®, céramique, pierre. Le socle ou zone d'appui 20,200 peut être réalisé en un même matériau que le plateau ou en un matériau différent.

Conformément à l'invention, on assemble par collage une extrémité 60,600 du capteur 30,300 au plateau 10,100 et/ou également l'extrémité opposée 70,700 au socle ou zone d'appui 20,200. Pour ceci, la totalité de la surface de collage définie précédemment par la surface S du capteur est enduite d'un adhésif déposé en une certaine quantité afin d'obtenir, par polymérisation, un joint d'une épaisseur prédéterminée. L'épaisseur du joint de colle est précisément maîtrisée pour assurer une bonne tenue mécanique du capteur par rapport à la base d'application de contraintes.

Le choix de l'adhésif se fait en fonction de la nature des matériaux à coller et en fonction des contraintes qui s'exercent sur l'assemblage collé. Les adhésifs utilisés dans le cadre de l'invention sont des adhésifs époxy ou polyacryliques à polymérisation aux UV ou en température.

Les figures 2a et 2b montrent un exemple de réalisation de l'assemblage dans lequel les capteurs 300 sont appliqués sur le plateau 100 dans le sens des flèches, leur extrémité 600 étant enduite d'adhésif sur toute la surface S. Les capteurs 300 et le plateau 100 sont maintenus en contact un certain temps à une température prédéterminée, avec ou sans apport de rayonnement UV, afin de réaliser la polymérisation de la couche d'adhésif. Une fois le collage réalisé, l'autre extrémité 700 est fixée dans une zone d'appui ou pied 200 par toute méthode d'assemblage mécanique, ou également par collage.

D'autres variantes et modes de réalisation de l'invention peuvent être imaginés sans sortir du cadre de ses revendications. Ainsi, on peut imaginer l'utilisation de tout autre type de matériau pour le plateau et/ou le socle et toute autre forme pour le capteur, à condition de respecter les conditions liées au calcul de la surface de colle optimale et de bien respecter l'épaisseur du joint de colle en fonction de la nature de l'adhésif et des substrats.

## Revendications

1. Appareil de pesage comprenant un plateau rigide (10,100) destiné à recevoir le poids à mesurer, une zone d'appui fixe (20,200) et au moins un capteur de poids (30,300) encastré par collage à l'une de ses extrémités (60,600) dans le plateau (10,100) et à l'extrémité opposée (70,700) dans la zone d'appui fixe (20,200), ledit capteur de poids (30,300) comportant une barre déformable principalement par flexion (40,400) sous l'effet du poids appliqué sur ledit plateau et portant des jauges d'extensométrie (R1, Ri), **caractérisé en ce que** le capteur (30,300) est réalisé avec sa barre déformable en une seule pièce, en étant plié ou plan, et **en ce qu'**au moins l'une des extrémités d'encastrement (60,600) dudit capteur de poids (30,300) présente une surface (S) destinée à être directement fixée par collage au plateau rigide (10,100) ou à la zone d'appui fixe (20,200).

2. Appareil de pesage selon la revendication 1, **caractérisé en ce que** ladite surface plane (S) définit une zone de collage par capteur de surface inversement proportionnelle au nombre de capteurs de poids (30,300) de l'appareil.

3. Appareil de pesage selon l'une des revendications ou 2, **caractérisé en ce que** la liaison par collage est sous forme d'un joint à recouvrement

4. Appareil de pesage selon l'une des revendications précédentes, **caractérisé en ce que** ledit adhésif est choisi parmi les adhésifs époxy ou polyacryliques polymérisant aux UV ou en température.

5. Appareil de pesage selon la revendication 4, **caractérisé en ce que** l'épaisseur de l'adhésif utilisé pour réaliser le collage est choisie en fonction de la nature des matériaux à coller et elle est de préférence comprise entre 0,05 et 0,5 mm.

6. Appareil de pesage selon l'une des revendications précédentes, **caractérisé en ce que** ledit plateau (10,100) est réalisé en verre trempé ou en métal.

7. Appareil de pesage selon l'une des revendications précédentes, **caractérisé en ce qu'**il comprend au moins trois capteurs de poids (300) fixés avec l'une de leurs extrémités d'encastrement (600) sur la périphérie d'un plateau (100), l'extrémité opposée étant déportée par rapport au plateau et fixée à un appui (200) formant pied de l'appareil.

## Patentansprüche

1. Wiegevorrichtung mit einer starren Platte (10, 100), welche dazu bestimmt ist, das zu messende Gewicht aufzunehmen, einem festen Auflagebereich (20, 200) und mindestens einem Gewichtssensor (30, 300), der durch Kleben an einem seiner Enden (60, 600) in die Platte (10, 100) und am entgegengesetzten Ende (70, 700) in den festen Auflagebereich (20, 200) eingesetzt ist, wobei der Gewichtssensor (30, 300) einen Arm (40, 400) aufweist, der unter der Wirkung des auf die Platte aufgebrachten Gewichts hauptsächlich durch Biegung verformbar ist und Dehnmessstreifen (R1, Ri) trägt, **dadurch gekennzeichnet, dass** der Sensor (30, 300) mit seinem verformbaren Arm einstückig ausgebildet ist, wobei er gefaltet oder eben ist, und dass mindestens eines der Einsetzenden (60, 600) des Gewichtssensors (30, 300) eine Oberfläche (S) aufweist, die dazu bestimmt ist, durch Kleben direkt an der starren Platte (10, 100) oder am festen Auflagebereich (20, 200) befestigt zu sein.

2. Wiegevorrichtung nach Anspruch 1, **dadurch gekennzeichnet, dass** die ebene Oberfläche (S) pro Sensor einen Klebebereich definiert, dessen Oberfläche umgekehrt proportional zur Anzahl der Gewichtssensoren (30, 300) des Geräts ist.

3. Wiegevorrichtung nach Anspruch 1 oder 2, **dadurch gekennzeichnet, dass** die Klebeverbindung in Form eines Überlappungsstoßes vorliegt.

4. Wiegevorrichtung nach einem der vorhergehenden Ansprüche, **dadurch gekennzeichnet, dass** der Kleber aus den Epoxidharz- oder Polyacrylklebem ausgewählt ist, die bei UV-Strahlung oder Temperatur polymerisieren.

5. Wiegevorrichtung nach Anspruch 4, **dadurch gekennzeichnet, dass** die Dicke des Klebers, der zur Realisierung der Klebung verwendet wird, in Abhängigkeit von der Art der zu klebenden Materialien gewählt ist und vorzugsweise zwischen 0,05 und 0,5 mm beträgt.

6. Wiegevorrichtung nach einem der vorhergehenden Ansprüche, **dadurch gekennzeichnet, dass** die Platte (10, 100) aus Hartglas oder aus Metall besteht.

7. Wiegevorrichtung nach einem der vorhergehenden Ansprüche, **dadurch gekennzeichnet, dass** sie mindestens drei Gewichtssensoren (300) aufweist, die an einem ihrer Einsetzenden (600) am Umfang einer Platte (100) befestigt sind, wobei das entgegengesetzte Ende bezüglich der Platte verschoben und an einer Auflage (200), die den Sockel des Geräts bildet, befestigt ist.

## Claims

1. Scales comprising a rigid plate (10, 100) for receiving the weight to be measured, a stationary support zone (20, 200) and at least one weight sensor (30, 300) embedded by adhesive at one of its ends (60, 600) in the plate (10, 100), and at its opposite end (70, 700) in the stationary support zone (20, 200), said weight sensor (30, 300) comprising a bar (40, 400) that is deformable mainly in bending under the effect of the weight applied to said plate and carrying strain gauges (R1, Ri), the scales being **characterized in that** the sensor (30, 300) is made with its deformable bar as a single piece, being folded or plane, and **in that** at least one of the ends for embedding (60, 600) of said weight sensor (30, 300) presents a surface (S) for being secured directly by adhesive to the rigid plate (10, 100) or to the stationary support zone (20, 200).

2. Scales according to claim 1, **characterized in that** said plane surface (S) defines an adhesive zone per sensor of area inversely proportional to the number of weight sensors (30, 300) of the scales.

3. Scales according to claim 1 or claim 2, **characterized in that** the adhesive bonding is in the form of a lap joint.

4. Scales according to any preceding claim, **characterized in that** said adhesive is selected from epoxy or polyacrylic adhesives that polymerize on application of UV or temperature.

5. Scales according to claim 4, **characterized in that** the thickness of the adhesive used for making the bond is selected as a function of the nature of the materials to be stuck together, and preferably lies in the range 0.05 mm to 0.5 mm.

6. Scales according to any preceding claim, **characterized in that** said plate (10, 100) is made of toughened glass or of metal,

7. Scales according to any preceding claim, **characterized in that** they include at least three weight sensors (300) each fixed with one of its ends for embedding (600) on the periphery of a plate (100), the opposite end being offset from the plate and secured to a support (200) forming a leg for the scales.
